# EUROPEAN PATENT SPECIFICATION

(11) **EP 3 228 952 B1**
(45) Date of publication and mention of the grant of the patent: **24.03.2021**
(21) Application number: 15856856.8
(22) Date of filing: 02.11.2015
(51) Int. Cl.: F25B 9/00, C09K 5/00, F28D 7/02

(54) **METHOD FOR OBTAINING LOW TEMPERATURES**
VERFAHREN ZUR ERZEUGUNG VON NIEDRIGEN TEMPERATUREN
PROCÉDÉ D'OBTENTION DE BASSES TEMPÉRATURES

(30) Priority: 05.11.2014 UA 201411998 U; 05.11.2014 UA 201411999 U
(43) Date of publication of application: 11.10.2017
(73) Proprietor: Limited Liability Company "Research And Production Company "Dni-Pro-Mto", Kyiv 02094 (UA)
(72) Inventor: MOSTYTSKYI, Andrii, Kyiv 03134 (UA); BAKLAN, Oleg, Kyiv 03126 (UA); KAMENIVSKYY, Andriy, Lviv 79007 (UA); KOMAROV, Borys, Kyiv 02140 (UA)
(74) Representative: Benatov, Samuil Gabriel
(86) International application number: PCT/UA2015/000103
(87) International publication number: WO 2016/072958

(56) References cited:
- DE-A1-102008 014 979
- SU-A1- 1 134 877
- UA-U- 86 653
- US-A- 4 967 566

## Description

### Technical field of the invention

The invention relates to a technology for freezing to minus 170 °C and can be used in clinics for the freezing and storage of various objects of medical purposes in freezing chambers with a volume to 160 cub.dm. of subzero refrigerators.

### Prior art

It is known from thermodynamics that the principle of refrigerating unit operation is based on phase transitions - evaporation and condensation, or others, where a working fluid is used under pressure and evaporation. At normal atmospheric pressure, the working fluids (hereinafter -refrigerants) of compression refrigerating units have a gaseous state. Under pressure in sealed containers they are liquefied. The phase state of refrigerants in separate compartments of sealed refrigerating units depends on the pressure and temperature. Under high pressure it is a liquid, and the low pressure - gas. When compressed, the refrigerant is heated, and upon expansion it boils heating the environment and evaporates cooling the same. It is required that the gaseous refrigerant should enter into the unit compressor to avoid hydraulic impacts and destruction of compressor parts.

A method is known for low temperature obtaining by compression of a refrigerant to the operating pressure by means of at least two throttle recuperation cycles or in two-stage compression refrigerating unit (see, e.g., book Grezin A.K., Zinoviev V.S. Microcryogenic equipment. M. "Mashinostroienie", 1978, p. 90-94). However, the working pressurization by means of multiple throttle recuperation cycles requires considerable energy consumption, reduces the thermodynamic coefficient of efficiency (hereinafter - coefficient of efficiency), specific volumetric cooling capacity and increases the cost of compression equipment.

As is well known, the main parts of the compression refrigerating units are the following components:
- Compressor - a device producing the necessary pressure difference;
- Evaporator - a device removing the heat from the internal refrigerator volume;
- The heat exchanger - condenser - a device heating the environment;
- Throttle device - a device supporting a pressure difference due to throttling the working fluid;
- Working fluid - a substance transferring the heat from the evaporator to the condenser.

However, it was found that the implementation of the process for heat recovery can reduce energy consumption, increase thermodynamic coefficient of efficiency and specific volumetric cooling capacity when freezing by means of compression refrigerating units. The single-stage compression refrigerating units were produced in which the method for heat recovery was implemented by means of the heat exchanger - recuperator, representing round seamless weldless tubes of stable section made of copper or brass arranged one in another (see, e.g., patent of Ukraine No. 31652 A, cl. C09 K 5/00, cl. F 25 B 1/00, Bul. No. 7, 15.12.2000).

Moreover, to reduce energy consumption and improve thermodynamic coefficient of efficiency and specific volumetric cooling capacity the multicomponent mixtures of refrigerants were produced, containing substances with low and high boiling points (see, e.g., Inventors Certificate of USSR No. 342482, cl. F 25 B 1/00, 1972, US Pat. No. 3872682, cl. 62 -114, 1975, or see e.g. WO2007/144306).

The following abbreviation is used for the designation of the refrigerants of said class:
- CFC - (chlorine - fluorine - carbon) - by the first letters of the Latin names of the chemical elements contained in the refrigerant;

The designation of each class of the refrigerant includes letter R - refrigerant. Earlier the refrigerant R-12 (freon-12, dichlorodifluoromethane CF2C12) has been used in the domestic installations. In the middle of the last century, the class of refrigerants - hydrochlorofluorocarbons - HCFC has been synthesized and widely used. The most widely used refrigerants of this class are R-22 and R-502.

The heat exchanger-recuperator for refrigerating compression units is known, which is close by technical substance and a number of essential features to the claimed heat exchange recuperator, to the device (see the patent of the Russian Federation No. 2378586, IPC F25B39/02, PCT Application: GB 2005/003700 20050923, PCT Publication: WO 2006/032922 20060330). The known recuperator device comprises internal pressurization and external suction pipelines disposed one within the other. In known heat exchangers - recuperators for refrigerating units the types of interfaces are used between the heat transfer fluids having equal coefficients of heat transfer in the middle and outside of the pipe; such tubes are tubes with a smooth surface.recuperator device represents copper or brass or steel pipe made as a pipe within a pipe. Vaporous or liquid substance participate in the heat transfer, and their flows move simultaneously and continuously. The main characteristic of structures of the known recuperators is a type of relative flow motion of the refrigerants of pressure line (forward flow) and suction line (reverse flow) and the mutual geometry of these flows which is the counterflow in the known devices, i.e. the reverse flow of liquids flows along the pipes with smooth surface in the annulus therebetween.

Thus, in units that implement the method of heat recovery of high-pressure line, the working fluid flow is further cooled by means of low pressure return stream flow. Thus, the use of heat regeneration and refrigerant mixture allows to obtain low temperature relatively inexpensively.

So, the method for low temperatures obtaining is known (see the patent of Ukraine No. 31652 A, cl. C09 K 5/00, cl. F 25 B 1/00, Bull. No. 7, 15.12.2000) which is close by technical substance and the number of significant features to the claimed method. The known method is used with a single throttle recuperation cycle or a single-stage compression refrigerating unit using the heat regeneration and refrigerant mixture, for obtaining of low temperatures at the level to minus 170 °C. According to the known method freon 404A, freon 134A, propane, isobutane, nitrogen, freon 14, freon 23, methane, ethane, propylene are used as refrigerants, and low temperature are produced by compression in the compressor by pressing with high pressure forward flow into the heat exchanger-condenser, pre-cooling of the high pressure forward flow to the partial liquefaction into the heat exchanger - condenser, pressing with high pressure forward flow into the heat-exchanger-recuperator, additional cooling with low pressure return stream to complete liquefaction in the heat-exchanger-recuperator, pressing with the high pressure forward flow in the throttle device, throttle of high pressure forward flow and reducing its pressure to elevated one, pressing with high pressure forward flow into the evaporator, its extension to the partial evaporation with heat extraction, and preheating of the object to be cooled in the evaporator, suction to form a return stream of low pressure into the heat exchanger-recuperator, its additional heating by the high pressure forward flow to complete evaporation of the refrigerants in the heat exchanger-recuperator, suction of refrigerants with return stream of low pressure in the compressor for recompression.

According to a known method in the heat exchanger-recuperator the cooling of the forward flow is carried out prior to its condensation (i.e., liquefaction) of refrigerants with a low boiling point and dissolving them simultaneously in condensed (i.e., liquefied) refrigerants having a high boiling point, but to dissolve in each other of refrigerants having differing phase state, the heat exchanger-recuperator has considerable geometrical dimensions. Therefore the single-stage compression refrigerating unit is not compact, and the condensation pressure generated by the compressor is relatively high at 4.0 - 6.0 MPa depending on the required level of cooling, and amount of spending refrigerants (chlorofluorocarbons) is relatively high, the most of said refrigerants appeared to have ozone-depleting potential.

It was found the substitute for refrigerant R-12, that is freon R-134a, belonging to a HFC group, which does not contain chlorine and other substitutes for freons - freon 404A, freon 14, freon 23 belong to the "greenhouse gases". By the decision of the Montreal Convention (Protocol 1987), their production and use are prohibited since January 1, 1994. In connection with the decision of Montreal Convention on the prohibition of the use of so-called CFC and HCFC freons the issue on finding other thermodynamic processes of the cold obtaining has been arisen.

Moreover, the applicant found that the low temperature refrigerator with a refrigerating chamber of working volume of 120 - 160 cubic dm, wherein the known method can be implemented, acquires considerable geometrical dimensions because of the size of the heat exchange -recuperator.

In view of the above experiments it was established that the properties and consumption of refrigerants affect the dimensions of heat exchanger - recuperator and the object of the invention is to improve the method for obtaining low temperatures by introducing of new operations, and their sequence of time at certain refrigerants. The method according to the invention also addresses to ensure obtaining cold to minus 170 °C in a low temperature refrigerating chambers with volumes of 120 -160 cub.dm. using certain devices.

Also in the object of the invention is to improve the heat-exchanger-recuperator of single stage compression refrigerating apparatus by availability of new parts and members, their new arrangement, shape and mutual functional and structural connection, and their ratio, to provide the cold to minus 170 °C in refrigerator chambers of low temperature with volumes of 120 -160 cub. dm. And also to provide a relatively small geometrical dimensions and compactness of the single-stage compression refrigerating unit in general, operated at a gas pressure, which creates the compressor, of 1, 5 - 2.5 MPa and at refrigerant mixture for refrigerators of low temperature with refrigerating chamber of working volume 160 cub. dm.

### Disclosure of the invention

This problem is solved by a method for obtaining of low temperatures using a single throttle recuperation cycle in a compression refrigerating unit operating on a mixture of refrigerants boiling at various temperatures by means of their compression in the compressor, compressing by high pressure forward flow into a heat exchanger-condenser, pre-cooling the high pressure forward flow to the partial liquefaction in the heat exchanger - condenser, compression of high pressure forward flow into a heat exchanger-recuperator, additional cooling by return stream of low pressure to complete liquefaction in the heat exchanger-recuperator, compression by high pressure forward flow into a throttle device, throttle of high pressure forward flow to reduce its pressure to elevated one, compression by high pressure forward flow into the evaporator, its expansion to partial evaporation with heat extraction by preheating from the cooled object at the evaporator, suction by low pressure return stream flow into the heat exchanger-recuperator, its additional heating by forward flow high pressure to evaporate refrigerant in the heat exchanger-recuperator, suction of refrigerants by return stream of low pressure to the compressor for recompression, wherein in said method as refrigerants boiling at various temperatures isobutane, ethylene, methane and nitrogen are used, complete liquefaction of the refrigerants is performed in the heat exchanger-recuperator by splitting of high pressure forward flow with simultaneous additional cooling by return stream of low-pressure, and complete evaporation of the refrigerants in a heat exchanger-recuperator is carried out by reducing the rate of rectilinear motion and splitting of low-pressure return stream and simultaneously its additional heating is performed by high pressure forward flow.

In an embodiment of the method the splitting of the high pressure flow to complete liquefaction of refrigerants in the heat exchanger-recuperator is carried out by intensive rotational motion of the liquefied refrigerants by a helical path, and the splitting of the low pressure return stream is performed by reducing the rate of its rectilinear motion in 2 - 4 times, giving to the return stream of liquefied refrigerants the rotary motion by helical path and passing through the curved surfaces in the heat exchanger-recuperator.

The embodiment of the method is possible, wherein isobutane, ethylene, methane and nitrogen are used in the following ratio of their weight %:

| | |
|---|---|
| isobutene | 0.4 - 0.7; |
| ethylene | 0.2 - 0.4; |
| methane | 0.1 - 0.3; |
| nitrogen | 0.1 - 0.3. |

The embodiment of the method is possible, wherein isobutane, ethylene, methane and nitrogen are used in the following ratio of their weight %:

| | |
|---|---|
| isobutane | 0.5; |
| ethylene | 0.25; |
| methane | 0.125; |
| nitrogen | 0.125. |

The embodiment of the method is possible, wherein as refrigerants boiling at various temperatures, isobutane, propylene, ethane, methane, and nitrogen are used in the following ratio of their weight %:

| | |
|---|---|
| isobutane | 0.4 - 0.7; |
| propylene | 0.15 - 0.6; |
| ethane | 0.2 - 0.4; |
| methane | 0.1 - 0.3; |
| nitrogen | 0.1 - 0.3. |

The embodiment of the method is possible, wherein isobutane, propylene, ethane, methane and nitrogen are used in the following ratio of their weight% :

| | |
|---|---|
| isobutane | 0.4; |
| propylene | 0.2; |
| ethane | 0.2; |
| methane | 0.1; |
| nitrogen | 0.1. |

Experimentally, the authors found that the nature of the processes of heat transfer and hydrodynamics in the heat exchangers is conditioned by their design, temperature level and amount of refrigerant consumption, which in turn is determined by the type and the cooling efficiency of the refrigerating unit.

Also, it was found by the authors that the properties and consumption of the refrigerants affect the size of the heat exchanger.

A first aspect of the present invention represents a set of such new operations and the sequence of their performing over time using the certain substances in the method as refrigerants boiling at various temperatures, namely: the method uses isobutane, ethylene, methane and nitrogen, the complete liquefaction of the refrigerants is performed in heat exchanger-recuperator by splitting of high pressure forward flow with simultaneous additional cooling by low pressure return stream, and the complete evaporation of the refrigerants is performed by reducing the rate of rectilinear motion and splitting of low pressure return stream with its simultaneous additional heating by high pressure forward flow. Also by the presence of the core as a cylinder, the shell and the tubular member in a heat exchanger-recuperator, arrangement of the core and the shell coaxially to each other, formation a channel of the suction pipeline in a recuperator between the core and the shell as an inlet chamber, the annular channel and the outlet chamber, tubular member twisted in the form of a cylindrical helix, arrangement of coils of the twisted tubular member on the pressurizing pipeline with the same pitch to form the screw channel between the helix coils of the tubular member and the core and between the helix coils of the tubular member and the shell.

As well as performing the pressurizing pipeline twisted as a cylindrical helix and helical form of its channel, the helical coils of the pressurizing pipeline with the same pitch and arranged alternately to form projections of the helical coils of the pressurizing pipeline and recesses between the coils of its helix, as well as by arrangement of the helical axis of the tubular member and the helical axis of the pressurizing pipeline in mutually perpendicular planes. And also, by means of the core, the shell, pressurizing pipeline and the tubular member of constant cross section, making of the core and the shell of corrosion-resistant steel, and the pressurizing pipeline and the tubular member of a material with high coefficient of thermal conductivity.

As a result of intensive rotational motion of the liquefied refrigerant by the helical path the non liquefied refrigerants in vapor state are passed through a layer of liquefied ones. The splitting of continuous volume of non liquefied refrigerants occurs to form vapor bubbles. As a consequence, the structured flow is formed due to the pressure elevation to the pressure corresponding to a pressure of condensing of non liquefied refrigerants. By reducing the rate of low pressure return stream when it is heated further, but intensive rotation on a helical path of its movement the interaction of vaporized refrigerants with not evaporated refrigerants has been improved, i.e. through the same layer of not evaporated refrigerants the greater quantity of refrigerants in liquid state were passed. The better splitting of continuous amount of not evaporated refrigerants occurred as well as the formation of bubbles of them. When the flow of bubbles with a lower rate through projections and recesses, i.e. through the barriers, the bubbles compress each other more often, forming large size bubbles, and often they burst. The conditioned pressure drop occurs in the return stream to a pressure that corresponds to the pressure of vaporization. Thus, with additional heating of the return stream at low rate the additional evaporation process was faster as well as the complete evaporation of the refrigerants before recompression. And in combination with other operations of said method it provides a cold as minus 170 °C in a low temperature refrigerating chambers with volumes of 120-160 cub.dm. via compact single-stage compression refrigerating unit and refrigerant mixtures boiling at various temperatures.

A second aspect of the present invention represents a set of such new operations and the sequence of their performance over time, namely: in the heat exchanger-recuperator the splitting of high pressure flow for complete liquefaction of the refrigerants is carried out by intensive rotational motion of the liquefied refrigerants by a helical path, and for complete evaporation of the refrigerants the rate of low pressure return stream is reduced in 2 - 4 times and its splitting is carried out by passing it through a projections and recessions. These operations ensured the reduction of condensation pressure produced by the compressor and in combination with other method operations it provides the cooling to minus 170 °C in a low temperature refrigerating chambers with volumes of 120-160 cub.dm. via compact single-stage compression refrigerating unit and refrigerant mixture boiling at various temperatures.

Another aspect of this invention is the ratio of isobutane, ethylene, methane and nitrogen. It should be considered that the properties and consumption of refrigerants affect the overall dimensions of the heat exchanger-recuperator.

The corresponding ratio of isobutane, ethylene, methane and nitrogen, reducing the size of the pressurizing pipeline by height, small ratio of diameters of core and shell to their height at the required heat efficiency, i.e. corresponding geometrical characteristics, corresponding general configuration of the surfaces transferring the heat and corresponding compactness of the heat exchanger-recuperator and the heat exchanger -recuperator itself provide the temperature level to minus 170 °C in the refrigerating chambers with working volume of 120 - 160 cub.dm.

Another aspect of this invention is the use of various substances, namely: isobutane, propylene, ethane, methane and nitrogen in their relative proportions as the working fluid and an embodiment of the heat exchanger-recuperator comprising a pressurizing pipeline as a main and at least one secondary pipeline, twisted together along their common axis and their execution of a copper pipe of the same diameter.

The authors have experimentally determined refrigerants and their certain ratio to obtain low temperatures to minus 170 °C in single-stage compression refrigerating unit with heat recovery and a relatively low power compressor in chambers of low temperature refrigerators of 120 -160 cub.dm..

Addition of the above studies on known rules by any other method for obtaining low temperatures using compact single-stage compression refrigerating unit and refrigerant mixture boiling at various temperatures that are known to the authors, would not lead to the achievement of the technical result, representing the provision of cold to minus 170 °C in a low temperature refrigerating chambers with volumes of 120-160 cub.dm..

### Brief description of the drawings

The invention is further exemplified by specific embodiment and drawings, in which:
- Fig. 1 schematically shows a compression refrigerating unit for obtaining of low temperatures in accordance with the invention;
- Fig. 2 schematically shows a refrigerating cycle with heat recovery in coordinates T-S (TS-diagram) of the compression refrigerating unit for low temperatures obtaining in accordance with the invention;

- Fig. 3 schematically shows the direct "Θ1" and reverse "Θ2" heat recovery flows according to the invention;
- Fig. 4 schematically shows a section I-I of Fig. 3;
- Fig. 5 schematically shows the area A of Fig. 4.

### Best embodiment of the invention.

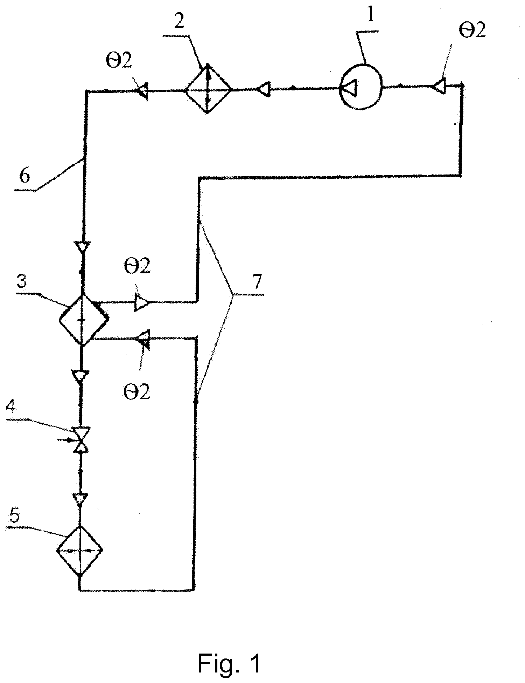

A method for obtaining of low temperatures to minus 170 °C in a low temperature refrigerating chambers with volumes of 120-160 cub. dm via throttle recuperation cycle is carried out in a single-stage compression refrigerating unit (see Figure 1.) using particular working flow - refrigerant mixtures boiling at various temperatures. The method uses isobutane, ethylene, methane and nitrogen as refrigerants boiling at various temperatures, and the best results were achieved in the following ratio, weight%:

| | |
|---|---|
| isobutane | 0.5; |
| ethylene | 0.25; |
| methane | 0.125; |
| nitrogen | 0.125. |

The embodiment of the method, wherein as the refrigerant mixture boiling at various temperatures isobutane, propylene, ethane, methane, and nitrogen are used in their following ratio, weight %:

| | |
|---|---|
| isobutane | 0.4; |
| propylene | 0.2; |
| ethane | 0.2; |
| methane | 0.1; |
| nitrogen | 0.1 |

Refrigerant's boiling temperature at the pressure of 760 mm Hg is presented in Table 1 (see Table 1).

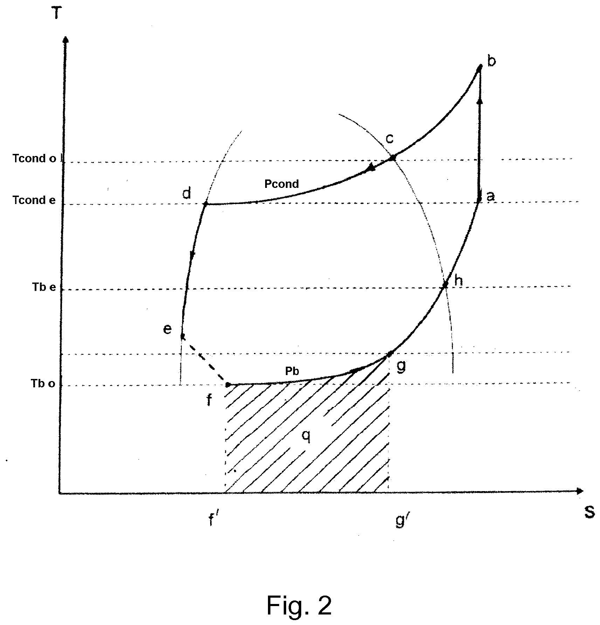

The supply and discharge of heat is described by TS-diagram of entropy change S, where and below the following is indicated (see. Fig. 2):
S - entropy; when heat supplying to the working fluid its entropy increases, and at heat removing - reduced;
T - temperature;

**Table 1**

| Refrigerant and its name according to IUPAC (International Union of Pure and Applied Chemistry) | Chemical formula | Boiling point under pressure 760 mm Hg, °C |
|---|---|---|
| Isobutane (methylpropane, 2-methylpropane) | C₄H₁₀ | t_{b} = -11,7 °C |
| Propylene | C₃H₆ | t_{b} = -47,75 °C |
| Propane | CH₃CH₂CH₃ | t_{b} = -42,07 °C |
| Ethene | C₂H₄ | t_{b} = -103,71 °C |
| Ethane | C₂H₆ | t_{b} = -88,63 °C |
| Methane (Tetrahydridocarbon) | CH₄ | t_{b} = -161,6 °C |
| Nitrogenium | N | t_{b} = -195,8 °C |

points a, b, c indicate the steady characteristic state of the working fluid;
lines a-b, b-c, etc. - change the parameters of working flow corresponding to the processes taking place in the unit;
To - ambient temperature;
Tcond o - temperature for onset of working flow condensation;
Tcond e - the temperature of the end of working flow condensation;
Tb o - temperature for onset of working flow boiling;
Tb e - temperature for end of working flow boiling;
qo - amount of heat which is taken from the object to be cooled;
Pcond - condensing pressure;
Pb - boiling pressure.

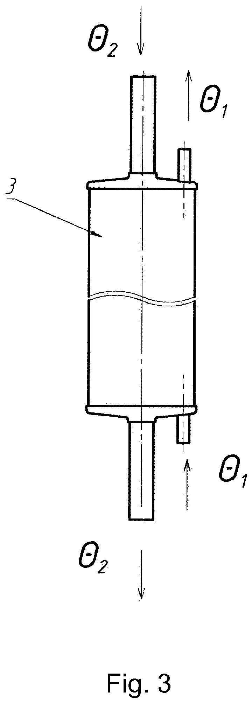

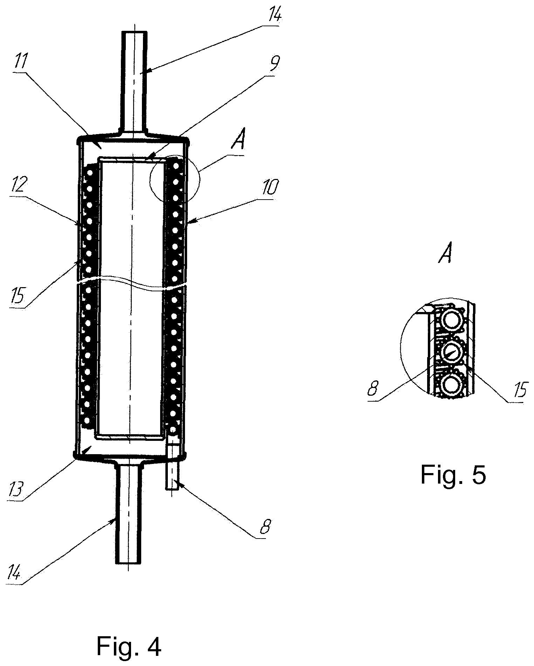

In one method, the throttle recuperation cycle is carried out in single-stage compression refrigerating unit comprising compressor 1, heat exchanger - condenser 2, heat exchanger - recuperator 3, throttle device 4, evaporator 5 which are connected to each other by corresponding high-pressure pipeline unit 6 and low pressure pipeline unit 7 to create "Θ1" direct high pressure and "Θ2" reverse low pressure of working fluid flows, respectively (see. Fig. 1, 2). The heat exchanger - recuperator 3 for compression refrigerating units has arranged one within the other internal pressurization and external suction pipelines. The heat exchanger - recuperator 3 comprises at least one pressurizing pipeline 8, core 9 in the form of a cylinder of constant section and shell 10 in the form of cylinder of constant section as well. The pressurizing pipeline 8 is twisted in a cylindrical helix to form a helical channel and with its outer surface formed as a cylindrical helical coil with alternately arranged projections and recesses between the protuberances (see. Fig. 3 and 4). The core 9 and shell 10 are arranged coaxially to each other and with a gap between them to form, according to the invention, the channel of the suction pipeline in the form of an inlet chamber 11, annular channel 12 and outlet chamber 13. On the upper and lower surfaces of the shell 10 the connecting fittings 14 are mounted.

The heat exchanger - recuperator 3 also comprises a tubular member 15 disposed on the pressurizing pipeline 8, which is a cylindrical helix twisted with, for example, copper pipe. A helical path is formed between the coils of the helix of the tubular member 15 and the core 9, and between the coils of the helix of the tubular member 15 and the shell 10. The helical axis of the tubular member 15 and the helical axis of the pressurizing pipeline 8 are arranged in mutually perpendicular planes.

In the heat exchanger - recuperator 3 the ratio of flow areas of the annular channel of the suction pipeline and the channel of the pressurizing pipeline 8 is 1.2 - 3.3, and the ratio of the cross sections of the core 9 and the shell 10 is 2 - 3.

The vapor of the mixture containing refrigerants which boil at higher temperatures, preferably isobutane, and the refrigerants which boil at a lower temperature, preferably ethylene, methane and nitrogen in an appropriate ratio are compressed in the compressor 1 (see Table 1 and Fig.1) to a pressure of 1.5 MPa - 2.5 Pa, i.e. pressure condensing preferably isobutane. The process of compressing refrigerant vapor corresponds to a - b line on TS-diagram (see. Fig. 2). During compression in the compressor 1 the refrigerant vapor their temperature T is increased due to internal friction between the moving refrigerants, lubricants, etc. (process a - b on TS-diagram); wherein the environment with a temperature To specific (i.e., per unit of amount of refrigerants) heat qo is transmitted, which conventionally corresponds to a hatched area in Fig. 2. The boiling pressure Pb and condensing pressure Pcond are uniquely associated with the working fluid boiling point Tb and condensation temperature Tcond of the working fluid, i.e. preferably of isobutane, ethylene, methane and nitrogen, and the condensation temperature Tcond is determined by a temperature of the cooled object. The compressed and heated during compression mixture of vapors of predominantly isobutane, ethylene, methane and nitrogen is pressurized into the heat exchanger-condenser 2. In the heat exchanger - condenser 2, the heated vapors, predominantly of isobutene, are cooled to the condensation pressure predominantly of isobutane; it changes the phase state of vapor in the heated liquid (line b - c on TS- diagram). Thus heated vapors preferably of ethylene, methane and nitrogen are in a vapor phase state and thus in a heat exchanger-condenser 2 the working fluid is partially liquefied. The process of cooling the working fluid corresponds to the line b - c d on TS-diagram (see Fig. 2). To change the phase state of isobutane the heat is transferred from each unit of its mass equal to the specific heat of condensation or the specific heat of vaporization. In the heat exchanger-condenser 2, the volume of liquid remains constant until the steam temperature or pressure changes cause corresponding changes in the intensity of liquefaction.

After heat exchanger-condenser 2 in the vapor-liquid state the liquefied working fluid predominantly isobutane and not liquefied preferably ethylene, methane and nitrogen, that is, high pressure forward flow "Θ1" through a filter-dryer (Fig. 1, not shown) is pressurized into the heat exchanger - recuperator 3 comprising predominantly one pressurizing pipeline 8 for forward flow high pressure "Θ1" and one low-pressure suction pipeline for "Θ2" return stream (see Fig. 3, 4, 5). The pressurizing pipeline 8 of the heat exchanger - recuperator 3 is twisted into a cylindrical helix, the coils of which are made with the same pitch to form helical channel inside. Thus, using the pressurizing pipeline 8 the forward flow is pressurized to impart a helical path, corresponding its helical channel (see. Fig. 3, 4, 5, indicated by arrows "Θ1"). At that liquefied refrigerant, preferably isobutene, acquires rotational movement, and not liquefied (in a vapor phase state) refrigerants, preferably ethylene, methane and nitrogen, behave as vapor and pressurized in a straight line. As a result of intensive rotational motion of the liquefied refrigerant, preferably isobutene, on a helical path not liquefied (in a vapor phase state) refrigerants, preferably ethylene, methane and nitrogen, are passed through a layer of liquefied refrigerant, preferably isobutane. The splitting of continuous volume of not liquefied refrigerant occurs, preferably ethylene, methane and nitrogen to form bubbles of refrigerant vapor, preferably ethylene, methane and nitrogen. As a result, a structured flow is formed due to an increase in pressure to a pressure corresponding to a condensing pressure of not liquefied refrigerants, preferably ethylene, methane and nitrogen. Thus, simultaneously high pressure forward flow "Θ1" is subjected to additional cooling by low pressure return stream "Θ2" which is sucked from the evaporator 5 into the suction pipeline (see. Fig. 3, 4, 5, designated by arrows "Θ2"). With this additional cooling high pressure forward flow "Θ1" temperature is decreased and bubbles from vapors of ethylene, methane and nitrogen are mixed bursting in the liquid of liquefied refrigerant, preferably isobutane. Thus, there is additional condensation process, i.e. complete liquefaction of high pressure forward flow "Θ1" in the heat exchanger - recuperator 3 before its throttling. The process of additional cooling of high pressure forward flow "Θ1" corresponds to the line d - e on TS-diagram (see. Fig. 2). Further the throttling of additionally cooled and structured high pressure forward flow "Θ1" is performed. At throttling through restriction of the throttle device 4 passageway further slight decrease in temperature takes place for the high pressure forward flow "Θ1", i.e. the refrigerant mixture is subcooled, maintaining the increased pressure. The throttle device 4 is a capillary tube of constant section, wherein the difference of condensing pressure Pcond and boiling Pb of refrigerants, preferably isobutane, ethylene, methane and nitrogen, is provided by the hydraulic resistance over the entire length of the capillary tube. The throttling process of completely liquefied refrigerants, preferably isobutane, ethylene, methane and nitrogen, corresponds to the line e - f on the TS-diagram (see Fig. 2). The capillary tube 4, which connects the lines of pressurizing and the suction, balances the pressure in the refrigerating unit when the compressor 1 is stopped. This facilitates unloading of the compressor 1 at the time of start-up and allows using of electric motors with low starting torque. From the throttle device 4 under the action of depression created in the suction pipeline of the compressor 1 (not shown on Fig.) subcooled pressurized forward flow "Θ1" of liquefied refrigerants, preferably isobutane, ethylene, methane and nitrogen, is pressurized into the evaporator 5 (see Fig. 1). When under pressure occurs in the evaporator 5 the boiling (evaporation) of liquid refrigerants occurs, which boil at higher return stream temperature, preferably isobutene, to completely vaporized state (see Fig. 2, line f -g on TS-diagram). When vaporized refrigerants take the heat from the cooled object. The evaporation process is thermodynamic process in which the molecules of the liquid absorb thermal energy. When evaporation is rapid change of the refrigerant fluid volume, preferably isobutane, is fast, and the heat needed for boiling is extracted from the cooled object, whereby the object is cooled with a corresponding reduction in temperature to minus 170 °C. The process of heating of the working fluid and its partial evaporation corresponds to the line f - g on TS-diagram (see. Fig. 2). From the evaporator 5, the working fluid is sucked by low pressure return stream "Θ2" in the heat exchanger-recuperator 3 (see. Fig. 1). The low pressure return stream "Θ2" in the heat exchanger-recuperator 3 is additionally heated by high pressure forward flow "Θ1" (see Fig. 2, line g - h on the TS-diagram). The volume of fluid in the low pressure return stream "Θ2" remains unchanged, until the vapor pressure or temperature change cause corresponding changes in the intensity of evaporation. As shown in Fig. 4, 5 in a heat exchange - recuperator 3, namely in the annular channel 12 of the suction pipeline, the return stream "Θ2" is directed by curved surfaces from the projections and recesses formed by the coils of the cylindrical helices of twisted pressurizing pipeline 8 and tubular member 15 thereon, i.e. the return stream "Θ2" is directed through barriers and by the helical path of the helical channel formed by the helical coils of the tubular member 15 to the helical coils of the pressurizing pipeline 8 between the latter and the core 9 and between the coils of the pressurizing pipeline 8 and the shell 10. As a consequence, the refrigerants, which are evaporated, mainly isobutene, behave as vapor and absorbed rectilinearly, and the refrigerants which are not evaporated (i.e., in liquid state) acquire intensive rotational motion of the helical path from the helical coils of the tubular member 15. As a result refrigerants which evaporated (that is in the state of wet vapor) are passed through a layer of refrigerants that did not evaporate, preferably ethylene, methane and nitrogen. The breaking of continuous vapor-liquid low pressure return stream "Θ2" occurs and the splitting to the bubbles of refrigerant flow, which did not evaporate, preferably ethylene, methane and nitrogen. Under the effect of the depression created in the suction pipeline of the compressor 1, the liquid and bubbles flow at a relatively high rate in the annular channel 12 of the channel of the suction pipeline. Consequently, in the return stream "Θ2" cavities are formed, i.e. depressions, in which the bubbles of refrigerant are discharged, preferably of ethylene, methane and nitrogen. Bubbles of refrigerants, preferably of ethylene, methane and nitrogen, compress each other, larger bubbles are formed and they burst. The conditioned pressure drop occurs in the return stream "Θ2" to a pressure corresponding to the evaporation pressure. Thus, in the annular channel 12 of the suction pipeline of heat exchanger - recuperator 3 the simultaneous local additional vaporization occurs downflow in the evaporator 5, and the required heat to complete evaporation of the refrigerant is taken away from their high pressure forward flow "Θ1" and heat generated by internal frictions between the particles of moving refrigerants. The process of additional heating of the return stream "Θ2" corresponds to the line h - a on the TS-diagram (see Fig. 2). And as a result, overheated vapor-liquid mixture of refrigerants evaporates completely before recompression. After the heat exchanger - recuperator 3 the return stream "Θ2" is sucked by the compressor 1 for recompression. The compressor 1 sucks the vapor with the pressure Po and the temperature To. When stopping the compressor 1, the pressure equalization in the heat exchanger - condenser 2 and evaporator 5 occurs, i.e. Pcond ∼ Po, which is caused by the throttle device 4. When the compressor 1 is launched, the discharge pressure rises not instantaneously but gradually to achieve the nominal value of the condensing pressure. The electric current used by the motor of the compressor 1 is gradually increasing along with the increasing supply pressure. Thus, according to the invention, in a method for obtaining low temperatures using a single throttle recovery cycle the heat exchanger - recuperator 3 operates as a two-phase one in a closed condensation- evaporation cycle. From the analysis of the refrigerating cycle with the regeneration of heat in a compression refrigerating unit for obtaining low temperatures in accordance with the invention, the T-S diagram shows that during the boiling in the evaporator 5, the temperature of the mixture of refrigerants boiling at various temperatures, varies from Tb o = Tmin (point f) up to Tb e (h point). The temperature Tmin is determined by boiling temperatures of refrigerant-coolants boiling at higher temperatures. In the heat exchanger - condenser 2 the temperature of the mixture varies from Tcond o (point c) up to Tcond e = To (point d) and Tmax temperature (point b) is a function of pressure. It was found that in the compression refrigerating unit operating on refrigerant mixture boiling at various temperatures, the presence of refrigerants in the above ranges enables to maintain cooling at the desired level, but with their less contents the cooling to the desired level is not provided, and further increasing of their content leads to increasing of pressurizing pressure, and as a consequence, to increasing the load on the compressor, and the daily power consumption.

Experimental verification of the working flow as described above was carried out in a low temperature refrigerator with a refrigerating chamber with volume of 120 - 160 cub.dm. and with experimental single-stage refrigerating compressor unit with condensing pressure 1 5 - 2.5 MPa and improved compact heat exchanger - recuperator. With the experimental working fluid, this experimental compression refrigerating unit worked with a positive result - cooling to minus 170 °C in the chamber of 120 - 160 cub. dm., more than 1000 hours, which almost confirms the reliability of said working fluid and the refrigerating unit. The pressurizing pipeline 8 is made of a copper pipe with a diameter of 8 mm and a length of 10000 mm, i.e. with a very small diameter to length ratio.

The core 9 and the shell 10 are made of corrosion-resistant steel with the walls of 0,15 mm - 0.25 mm thick in order to reduce heat supply and heat loss due to thermal conduction of the core 9 and the shell 10. The tubular member 15 is made of a copper pipe with a diameter of 2.0 mm and a length of 120 000 mm. The embodiment is possible of a pressurizing pipeline 8 of the two pipes made of copper tube with an inner diameter of 4 mm - one main and one secondary.

The geometrical characteristics defining the impact of heat and hydraulic resistance of the low pressure return stream in the inlet chamber 11, annular channel 12 and the outlet chamber 13, i.e. the number of coils of the helical pipeline 8, the diameter and pitch of coils are experimentally established. The availability of differential pressure ensures continuous circulation of the working fluid in two-phase heat exchanger - recuperator 3. The substances participating in heat exchange are the substances which flows move simultaneously and continuously. The main characteristic of this heat exchanger design is the type of the relative motion of high pressure direct refrigerant flows and the low pressure return stream, the mutual geometry of these flows: countercurrent, changeover, i.e. the invention modified the nature of flow along pipelines, thus increasing the heat transfer coefficient, whereby the recuperator 3 becomes more compact, increasing the heat exchange performance of the recuperator 3, and a compressor 1 receives a gaseous mixture of refrigerants. Thus, said heat exchanger - recuperator provides corresponding geometrical dimensions and compactness of the single-stage compression refrigerating unit, as well as of low temperature refrigerator with a refrigerating chamber of volume 120 - 160 cub. dm.

Thus, this method for obtaining low temperatures using the single throttle recuperation cycle in a compression refrigerating unit operating on a mixture of refrigerants with different boiling temperatures, and the heat exchanger - recuperator for performing the method correspond to the conditions of novelty, have corresponding inventive step, have industrial applicability and enable to obtain cold to minus 170 °C in the low temperature refrigerating chamber of 120 - 160 cub.dm..

Other aspects and features of the invention may be ascertained by studying the drawings and the claims.

## Claims

1. A method for obtaining of low temperatures in a compression refrigerating unit operating on a mixture of refrigerants boiling at various temperatures by means of compression in a compressor (1) by pressurizing with high pressure forward flow into a heat exchanger - condenser (2), pre-cooling the high pressure forward flow to the partial liquefaction in the heat exchanger - condenser (2), pressurizing with high pressure forward flow in a heat exchanger - recuperator (3), further cooling of low pressure return stream until complete liquefaction in the heat exchanger - recuperator (3), pressurizing with high pressure forward flow in a throttle device (4), throttling and pressurizing with high pressure forward flow in an evaporator (5), its extension to the partial evaporation with the extraction of heat and the preheating of the object to be cooled in the evaporator (5), suction of low pressure return stream in the heat exchanger - recuperator (3) and its further heating with the high pressure forward flow to evaporate completely the refrigerants in the heat exchanger - recuperator (3) and suction of low pressure return stream of refrigerants to the compressor (1) for recompression, which is **characterized in that** as refrigerants boiling at various temperatures isobutane, ethylene, methane and nitrogen are used, complete liquefaction of the refrigerants in the heat exchanger - recuperator (3) is carried out by splitting of high pressure forward flow, and simultaneously its additional cooling is performed with low pressure return stream and complete evaporation of the refrigerants in the heat exchanger - recuperator (3) is carried by reducing the rate of rectilinear motion and splitting low pressure return stream and simultaneously its additional heating with the high pressure forward flow is performed.

2. The method according to claim 1, which is **characterized in that** the splitting of the high pressure flow to complete liquefaction of refrigerants in the heat exchanger - recuperator (1) is carried out by intensive rotational motion of the liquefied refrigerant by a helical path, and the splitting of low pressure return stream is performed by reducing the rate of its rectilinear motion in 2 - 4 times, imparting the rotational motion to the return stream of refrigerants liquefied by the helical path and passing through the curved surfaces in the heat exchanger - recuperator (1).

3. The method of claim 1, which is **characterized in that** isobutane, ethylene, methane and nitrogen are used in the following ratio, weight. %:
| | |
|---|---|
| isobutane | 0.4 - 0.7; |
| ethylene | 0.2 - 0.4; |
| methane | 0.1 - 0.3; |
| nitrogen | 0.1 - 0.3. |

4. The method of claim 1, which is **characterized in that** isobutane, ethylene, methane and nitrogen are used in the following ratio, weight. %:
| | |
|---|---|
| isobutane | 0.5; |
| ethylene | 0.25; |
| methane | 0.125; |
| nitrogen | 0.125. |

5. The method of claim 1, which is **characterized in that** as refrigerants boiling at various temperatures isobutane, propylene, ethane, methane, and nitrogen are used in the following ratio, weight %:
| | |
|---|---|
| isobutane | 0.4 - 0.7; |
| propylene | 0.15 - 0.6; |
| ethane | 0.2 - 0.4; |
| methane | 0.1 - 0.3; |
| nitrogen | 0.1 - 0.3. |

6. The method of claim 5, which is **characterized in that** isobutane, propylene, ethane, methane and nitrogen are used in the following ratio, weight. %:
| | |
|---|---|
| isobutane | 0.4; |
| propylene | 0.2; |
| ethane | 0.2; |
| methane | 0.1; |
| nitrogen | 0.1. |

## Patentansprüche

1. Gewinnungsmethode der niedrigen Temperaturen in der Kompressorkälteanlage, die aufgrund der Mischung der Kältemittel mit den unterschiedlichen Kochtemperaturen funktioniert, und zwar durch die Pressung in dem Kompressor (1) mittels des Pumpens des Hochdruckhauptstroms in den Wärmeaustauscher-Kondensator (2), der vorherigen Abkühlung des Hochdruckhauptstroms für die partielle Verflüssigung in dem Wärmeaustauscher-Kondensator (2), der Druckerhöhung mit dem Hochdruckgleichstrom in dem Wärmeaustauscher-Rekuperator (3), der weiteren Abkühlung des Niederdruckrückstroms bis zur vollständigen Verflüssigung in dem Wärmeaustauscher-Rekuperator (3), Druckerhöhung mit dem Hochdruckgleichstrom in der Drosseleinrichtung (4), Drosselung und Druckerhöhung mit dem Hochdruckgleichstrom in dem Verdampfer (5), dessen Ausdehnung bis zur partiellen Verdampfung mit der Wärmeableitung und der vorläufigen Aufwärmung des abzukühlenden Objekts in dem Verdampfer (5), Absaugung des Niederdruckrückstroms in den Wärmeaustauscher-Rekuperator (3) und dessen weitere Aufwärmung mit der Zufuhr des Hauptflusses für die vollständige Verdampfung der Kältemittel in dem Wärmeaustauscher-Rekuperator (3) und der Absaugung des Rückstroms der Niederdruckkältemittel in den Kompressor (1) für die nochmalige Pressung, was sich dadurch unterscheidet, dass als Kältemittel mit der unterschiedlichen Kochtemperatur Isobutan, Äthylen, Methan und Stickstoff verwendet werden, die komplette Verflüssigung der Kältemittel in dem Wärmeaustauscher-Rekuperator (3) erfolgt durch die Spaltung des Hochdruckgleichstroms, und gleichzeitig erfolgt dessen zusätzliche Abkühlung mit dem Niederdruckrückstrom und die vollständige Verdampfung der Kältemittel in den Wärmeaustauscher-Rekuperator (3) aufgrund der Minderung der Geschwindigkeit der geradlinigen Bewegung und der Spaltung des Niederdruckrückstroms, sowie gleichzeitig erfolgt dessen zusätzliche Aufwärmung mit dem Hochdruckgleichstrom.

2. Methode nach dem P. 1 der Patentformel, die sich dadurch unterscheidet, dass die Spaltung des Hochdruckstroms für die komplette Verflüssigung der Kältemittel in dem Wärmeaustauscher-Rekuperator (1) aufgrund der intensiven Drehbewegung des verflüssigten Kältemittels nach der schraubenförmigen Bahn erfolgt, und die Spaltung des Niederdruckrückstroms erfolgt aufgrund der Minderung der Geschwindigkeit dessen geradlinigen Bewegung um das 2-4-fache, dabei die Drehbewegung dem Rückstrom der Kältemittel, die nach der schraubenförmigen Bahn verflüssigt werden und durch die gebogenen Oberflächen in dem Wärmeaustauscher-Rekuperator (1) passieren, verleihend.

3. Methode nach dem P.l der Patentformel, die sich dadurch unterscheidet, dass Isobutan, Äthylen, Methan und Stickstoff im folgenden Verhältnis verwendet werden (Gew %):
| | |
|---|---|
| Isobutan | 0.4 - 0.7; |
| Äthylen | 0.2 - 0.4; |
| Methan | 0.1 - 0.3; |
| Stickstoff | 0.1 - 0.3. |

4. Methode nach dem P.1 der Patentformel, die sich dadurch unterscheidet, dass Isobutan, Äthylen, Methan und Stickstoff im folgenden Verhältnis verwendet werden (Gew %):
| | |
|---|---|
| Isobutan | 0.5; |
| Äthylen | 0.25; |
| Methan | 0.125; |
| Stickstoff | 0.125. |

5. Methode nach dem P. 1 der Patentformel, die sich dadurch unterscheidet, dass als Kältemittel mit der unterschiedlichen Kochtemperatur Isobutan, Propylen, Äthan, Methan und Stickstoff im folgenden Verhältnis verwendet werden (Gew %):
| | |
|---|---|
| Isobutan | 0.4 - 0.7; |
| Propylen | 0.15 - 0.6; |
| Äthan | 0.2 - 0.4; |
| Methan | 0.1 - 0.3; |
| Stickstoff | 0.1 - 0.3. |

6. Methode nach dem P. 5, die sich dadurch unterscheidet, dass Isobutan, Propylen, Äthan, Methan und Stickstoff im folgenden Verhältnis verwendet werden (Gew %):
| | |
|---|---|
| Isobutan | 0.4; |
| Propylen | 0.2; |
| Äthan | 0.2; |
| Methan | 0.1; |
| Stickstoff | 0.1. |

## Revendications

1. Le procédé d'obtention de basses températures dans le système frigorifique à compression fonctionnant sur un mélange de fluides frigorigènes à différentes températures d'ébullition, par compression dans un compresseur (1) par injection de flux directe à haute pression vers l'échangeur de chaleur - un condensateur (2), pré-refroidissement de flux directe à haute pression en vue de liquéfaction partielle dans l'échangeur de chaleur - le condenseur (2), augmentation de la pression par le flux directe à haute pression dans l'échangeur de chaleur - le récupérateur (3), refroidissement ultérieur du flux de retour à basse pression jusqu'à la liquéfaction complète dans l'échangeur de chaleur - le récupérateur (3), augmentation de la pression par le flux directe à haute pression à l'aide d'un dispositif d'étranglement (4), étranglement et augmentation de la pression par le flux directe à haute pression dans l'évaporateur (5), son expansion jusqu'à l'évaporation partielle avec évacuation de la chaleur et préchauffage de l'objet refroidi dans l'évaporateur (5), aspiration du flux de retour à basse pression vers l'échangeur de chaleur - le récupérateur (3) et son chauffage ultérieur avec l'adjonction du flux directe en vue d'évaporation complète des agents réfrigérants dans l'échangeur de chaleur - le récupérateur (3) et aspiration du flux inverse d'agents réfrigérateurs à basse pression vers le compresseur (1) pour la recompression, qui est **caractérisé en ce que** l'isobutane, l'éthylène, le méthane et l'azote sont utilisés en tant qu'agents réfrigérants ayant la température différente d'ébullition, la liquéfaction complète des agents frigorigènes dans un échangeur de chaleur - le récupérateur (3) est réalisé par la division du flux direct à haute pression, avec son refroidissement simultané par le flux de retour à basse pression et l'évaporation complète des fluides frigorigènes dans l'échangeur de chaleur - récupérateur (3) grâce à la réduction de la vitesse du flux directe et la division du flux de retour à basse pression avec son chauffage simultané par le flux directe à haute pression.

2. Le procédé selon la revendication 1, **caractérisé en ce que** la division du flux à haute pression jusqu'à la liquéfaction complète des agents frigorigènes dans l'échangeur de chaleur - le récupérateur (1) est effectuée grâce au mouvement intensif de rotation de l'agent réfrigérant liquéfié sur un trajectoire en hélice alors que la division du flux de retour à basse pression est effectuée grâce à la réduction de la vitesse de son mouvement rectiligne de 2 à 4 fois, donnant un mouvement de rotation au flux de retour des réfrigérants liquéfiés sur le trajectoire hélicoïdal et passant à travers des surfaces courbes dans un échangeur de chaleur - le récupérateur (1).

3. Le procédé selon la revendication 1, **caractérisé en ce que** l'isobutane, l'éthylène, le méthane et l'azote sont utilisés dans les proportions suivantes, pour-cent de la masse:
| | |
|---|---|
| Isobutane | 0.4 - 0.7; |
| Éthylène | 0.2 - 0.4; |
| Méthane | 0.1 - 0.3; |
| Azote | 0.1 - 0.3. |

4. Le procédé selon la revendication 1, **caractérisé en ce que** l'isobutane, l'éthylène, le méthane et l'azote sont utilisés dans les proportions suivantes, pour-cent de la masse:
| | |
|---|---|
| Isobutane | 0.5; |
| Éthylène | 0.25; |
| Méthane | 0.125; |
| Azote | 0.125. |

5. Le procédé selon la revendication 1, **caractérisé en ce que** l'isobutane, le propylène, l'éthane, le méthane et l'azote sont utilisés comme agents réfrigérants ayant la température différente d'ébullition dans les proportions suivantes, pour-cent
de la masse:
| | |
|---|---|
| Isobutane | 0.4 - 0.7; |
| Propylène | 0.15 - 0.6; |
| Éthane | 0.2 - 0.4; |
| Méthane | 0.1 - 0.3; |
| Azote | 0.1 - 0.3. |

6. Le procédé selon la revendication 5, **caractérisé en ce que** l'isobutane, le propylène, l'éthane, le méthane et l'azote sont utilisés dans les proportions suivantes, pour-cent de la masse:
| | |
|---|---|
| Isobutane | 0.4; |
| Propylène | 0.2; |
| Éthane | 0.2; |
| Méthane | 0.1; |
| Azote | 0.1. |
